# EUROPEAN PATENT SPECIFICATION

(11) **EP 0 450 145 B1**
(45) Date of publication and mention of the grant of the patent: **05.04.1995**
(21) Application number: 90117117.3
(22) Date of filing: 05.09.1990
(51) Int. Cl.: H02J 7/10

(54) **Method and apparatus for battery control**
Verfahren und Vorrichtung zur Batteriesteuerung
Procédé et appareillage de commande d'une batterie

(30) Priority: 30.03.1990 JP 84651/90
(43) Date of publication of application: 09.10.1991
(73) Proprietor: KABUSHIKI KAISHA TOSHIBA, Kawasaki-shi, Kanagawa-ken 210 (JP)
(72) Inventor: Ninomiya, Ryozi, c/o Intellectual Property Div., Minato-ku, Tokyo 105 (JP)
(74) Representative: Henkel, Feiler, Hänzel & Partner

(56) References cited:
- EP-A- 0 248 461
- EP-A- 0 288 013
- EP-A- 0 335 316
- US-A- 4 742 290

## Description

The present invention relates to a method and an apparatus for battery control.

In the field of personal computers, compact, lightweight, and portable laptop type personal computers have been popular in place of desktop type personal computers.

Most of the laptop type personal computers are driven by batteries or by both the batteries and AC adapters. When an A/C adapter is connected to a computer, the computer is driven by power supplied from the A/C adapter, and the battery is charged by the power. On the other hand, when the A/C adapter is not connected to the computer, the computer is driven by power supplied from the battery. Note that control operations for these power supplies are performed by a power supply controller.

The power supply controller monitors a battery voltage of a battery used for supplying the power. When the monitored battery voltage reaches such a voltage that enough power for operating the computer cannot be supplied, it is determined that the battery is in such a battery state that it can not be used any longer. In addition, when the battery voltage reaches a voltage slightly higher than the voltage of this battery state, the power supply controller generates an alarm to inform a user that the battery capacity is decreased to a low battery state.

Conventionally, when the battery in the low state is charged even within a short time, the power supply controller determines that the battery is not in the low battery state, and performs power supply control for the battery.

When the charged battery is used after the battery in the low battery state is charged within a short-time, however, the battery voltage is suddenly decreased to be in the low battery state soon after the use of the battery. As a result, power supply of the computer is turned off without generating of the above described alarm. In addition, in a computer having a resume function, the power supply of the computer is turned off before completion of the resume operation. Therefore, the resume function is not sufficient utilized.

Prior art document EP-A-0 288 013 discloses a battery control apparatus comprising a detachable battery powered device and a base station including the charger. A battery is set to be charged by the device. An AC adapter, checking and charging means are provided. The battery is charged when it is detected that the battery is in a "low battery state". A charge period is obtained from a control means. The charge amount of the battery is detected, and it is determined whether or not the desired charge amount and the obtained charge period is obtained.

Further, EP-A-0 335 316 discloses a battery control apparatus with more than one battery and indicating means for a low battery condition.

Finally document EP-A-0 248 461 discloses a battery powered device, e.g. shaver comprising a battery control apparatus similar to those above, wherein a low battery condition is indicated by "blinking until the battery voltage has increased above a 10%-level". When the device is connected to mains, the battery is charged for a charging time which depends on the discharged energy, and the charge status of the battery is corrected when a full charge condition is detected.

As described above, a demand has arisen for a power supply control apparatus capable of using the battery after sufficient charging of the battery in the low battery state.

It is an object of the present invention to provide a method and apparatus for a battery control.

To solve this object the present invention provides a battery control apparatus and method as specified in claims 1 and 4, respectively.

This invention can be more fully understood from the following detailed description when taken in conjunction with the accompanying drawings, in which:
Fig. 1 is a block diagram showing an arrangement of a power supply control system of an embodiment of the present invention; and
Fig. 2 is a power supply control flow chart in the power supply control system.

An embodiment of the present invention will be described in detail with reference to the accompanying drawings.

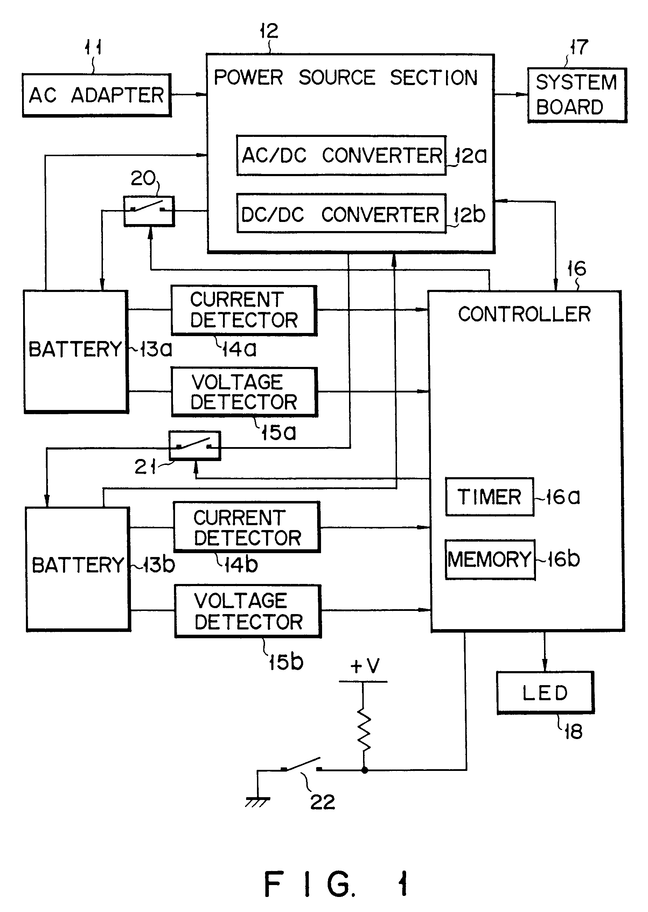

In Fig. 1, a power supply control system of the embodiment comprises an AC adapter 11, a power supply section 12, batteries 13a and 13b, current detectors 14a and 14b, voltage detectors 15a and 15b, a controller 16, a system board 17, an LED (light emitting diode) 18, and switches 20, 21, and 22.

The AC adapter 11 is used for supplying an AC voltage to the power supply section 12.

The power supply section 12 comprises an AC/DC converter 12a and a DC/DC converter 12b, and supplies a predetermined DC voltage to the system board 17. Note that, when the AC adapter 11 is connected to the power supply section 12, and the batteries 13a and 13b are in a low battery state, a charge current is supplied to the batteries 13a and 13b from the power supply section 12 through the switches 20 and 21, respectively.

The batteries 13a and 13b are used as chargeable power supplies and supplied the AC voltage to the power supply section 12.

The current detectors 14a and 14b detect charge currents and discharge currents at the batteries 13a and 13b and output the detected current values to the controller 16.

The voltage detectors 15a and 15b detect battery voltages of the batteries 13a and 13b and output the detected voltage values to the controller 16.

The controller 16 comprises a timer 16a and a memory 16b, and controls the power supply section 12, the switches 20 and 21, and the LED 18. Note that the timer 16a is used for measuring a charge time. In the memory 16b, a low battery flag indicating whether or not the batteries 13a and 13b are in the low battery state is set.

The system board 17 is used for operating a computer system (not shown).

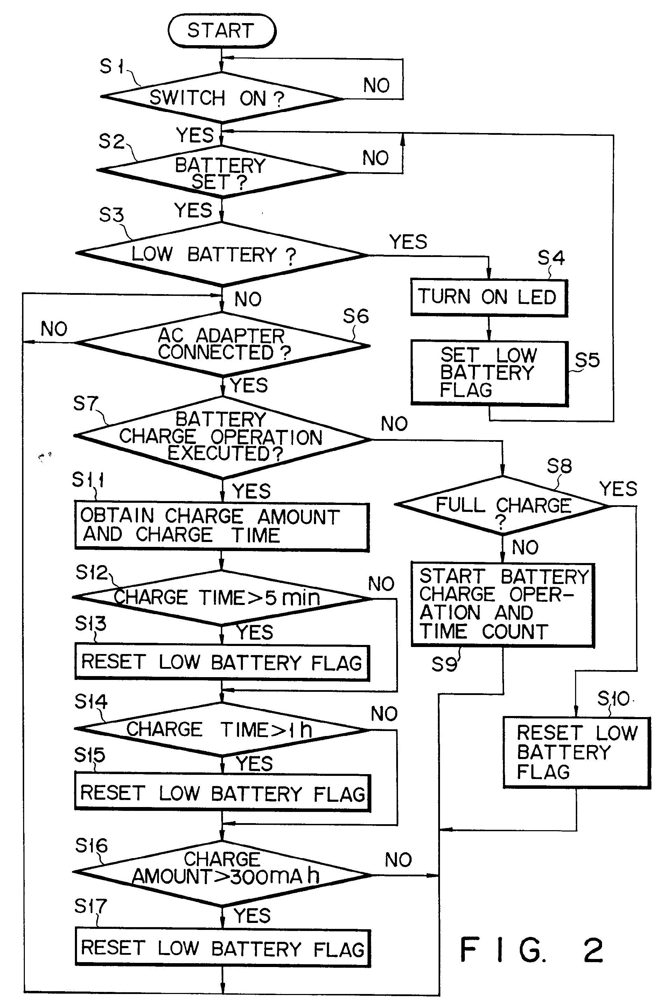

A power supply control operation in the power supply control system will be described with reference to a flow chart in Fig. 2.

It is determined in step S1 whether or not the switch 22 is turned on. That is, as shown in Fig. 1, since a voltage V is supplied to the controller 16, it is determined that the switch 22 is turned on when the voltage V becomes zero.

When the switch 22 is turned on in step S1, it is determined whether or not the battery is set in the embodiment system (step S2). In the system, two batteries 13a and 13b are used. When at least one battery is set in the system, it is determined whether or not the battery is in the low battery state (step S3). Note that the determination whether or not the battery is set in the system is, for example, performed on the basis of voltage values detected by the voltage detector 15a and 15b. In addition, determination whether or not the batteries set in the system are in the low battery state is, for example, performed on the basis of current values detected by the current detectors 14a and 14b.

When the battery set in the system is in the low battery state in step S3, the LED 18 is turned on (step S4), and a low battery flag indicating the low battery state is set (step S5). In this system, low battery flags (not shown) corresponding to two batteries 13a and 13b are arranged. As a result, for example, when two batteries are set in the system and both the batteries are in the low battery state, the low battery flags corresponding to the batteries are set, and the process in step S2 is executed again.

When the battery set in the system is not in the low battery state in step S3, it is determined whether or not the AC adapter 11 is connected to the power supply section 12 (step S6). More specifically, for example, when two batteries are set in the system and at least one battery is not in the low battery state, the process in step S6 is executed. Note that the low battery flag corresponding to the battery in the low battery state is set.

When the AC adapter 11 is connected to the power supply section 12 in step S6, it is determined whether or not battery charge operation is performed for the battery set in the system (step S7).

When the battery charge operation is not executed in step S7, it is determined whether or not the battery set in the system is fully charged (step S8). When the battery is fully charged in step S8, the low battery flag corresponding to the fully charged battery is reset (step S10) and the LED 18 is turned off. On the other hand, when the battery is not fully charged, the battery charge operation is started, and time count by the timer 16a is started (step S9).

When the battery charge operation is executed in step S7, a charge amount and a charge time of the battery are obtained (step S11). Note that, the charge time is obtained on the basis of the time count value of the timer 16a, and the charge amount is obtained on the basis of the current values detected by the current detectors 14a and 14b, and the time count value.

It is determined in step S12 whether or not the charge time of the battery exceeds a rapid charge time, for example, five minutes. When the charge time exceeds five minutes, it is determined that a sufficient charge amount for using the battery is obtained, and the low battery flag is reset (step S13), the LED 18 is turned off, and the battery charge operation for the battery is completed.

It is determined in step S14 that the charge time of the battery exceeds a normal charge time, for example, one hour. When the charge time exceeds one hour, it is determined that the sufficient charge amount for using the battery is obtained, and the low battery flag is reset (step S15). In addition, the LED 18 is turned off, and the battery charge operation for the battery is completed.

When charge amount of the battery exceeds a predetermined charge amount, for example, 300 (mA h) in step S16, it is determined that the sufficient charge amount for using the battery is obtained, and the low battery flag is reset (step S17). In addition, the LED 18 is turned off, and the battery charge operation for the battery is completed.

By the operation described above, the battery charge is performed until the battery set in the system obtains a predetermined charge amount.

Note that, when a battery becomes the low battery state during using of the battery, the corresponding battery flag is set, and the supply of a voltage from the battery with the low battery state to the power supply section 12 is stopped. When the AC adapter 11 is connected to the power supply section 12, the above-described battery charge operation for the battery with the low battery state is performed.

As described above, according to the system of the embodiment, when a battery set in the system is in a low battery state, the battery is not used until the battery obtains a predetermined charge amount. As a result, it can be prevented that the battery becomes the low battery state soon after the use of the battery and the system power supply is turned off. In addition, in a computer having a resume function, it can be prevented that the system power supply is turned off before resume process is completed.

## Claims

1. A battery control apparatus comprising
- at least one battery (13a, 13b),
- checking means for checking whether or not the battery is in a low battery state,
- displaying means (S3-S5; 18) for displaying a low battery state to provide an alarm signal to the user that the battery charge state is only slightly higher than that at which the battery cannot supply enough power,
- charging means for charging the battery when an AC adapter is connected, and the battery is not in a full charge condition,
- obtaining means (16a) for obtaining a charge period of the battery,
- detecting means (14a, 16, 14b) for detecting a charge amount supplied to the battery, and
- determining means (16) for determining whether or not a desired charge amount for the battery is obtained in accordance with at least one of the detected charge amount and the obtained charge period,
characterized in that
- the low battery indication is reset when the charge time or the charge amount, after beginning of the recharging when the AC adapter (11) is connected, are such that a sufficient charge amount for using the battery is obtained.

2. The apparatus according to claim 1, characterized in that the battery with the low battery state is charged until the charge amount exceeds the sufficient charge amount for using the battery.

3. The apparatus according to claim 1, characterized in that the battery with the low battery state is charged until the charge time exceeds a predetermined time corresponding to the sufficient charge amount for using the battery.

4. A battery control method comprising the steps of:
- checking (S3) whether or not a battery is in a low battery state,
- displaying (S3-S5; 18) a low battery state to provide an alarm signal to the user that the battery charge state is only slightly higher than that at which the battery cannot supply enough power,
- charging the battery when an AC adapter is connected, and the battery is not in a full charge condition,
- obtaining (S11) a charge amount of the battery,
- detecting a charge amount supplied to the battery, and
- determining (S16) whether or not a desired charge amount for the battery is obtained in accordance with at least one of the detected charge amount and the obtained charge period,
characterized in that
- the low battery indication is reset when the charge time or the charge amount, after beginning of the recharging when the AC adapter is connected, is such that a sufficient charge amount for using the battery is obtained.

5. The method according to claim 4, characterized in that the battery with the low battery state is charged until the charge amount exceeds the sufficient charge amount for using the battery.

6. The method according to claim 4, characterized in that the battery with the low battery state is charged until the charge time exceeds a predetermined time corresponding to the sufficient charge amount for using the battery.

## Patentansprüche

1. Batteriesteuerungsvorrichtung, die folgendes umfaßt:
- wenigstens eine Batterie (13a, 13b),
- eine Prüfeinrichtung zum Überprüfen, ob die Batterie in einem entladenen Batteriezustand ist oder nicht,
- eine Anzeigeeinrichtung (S3 - S5; 18) zum Anzeigen eines entladenen Batteriezustands, um dem Benutzer ein Warnsignal bereitzustellen, daß der Ladezustand der Batterie nur etwas höher ist als derjenige, in dem die Batterie nicht genügend Leistung liefern kann,
- eine Ladeeinrichtung zum Laden der Batterie, wenn ein Wechselstromadapter angeschlossen ist und die Batterie nicht in einem vollen Ladezustand ist,
- eine Erhaltungseinrichtung (16a) zum Erhalten eines Ladezeitraums der Batterie,
- eine Detektionseinrichtung (14a, 16, 14b) zum Detektieren einer in die Batterie eingespeisten Lademenge, und
- eine Bestimmungseinrichtung (16) zum Bestimmen, ob gemäß wenigstens eines der detektierten Lademenge und des erhaltenen Ladezeitraums eine gewünschte Lademenge für die Batterie erhalten wird oder nicht,
dadurch gekennzeichnet, daß
- die Anzeige der entladenen Batterie zurückgesetzt wird, wenn die Ladezeit oder die Lademenge nach dem Beginn des Wiederaufladens, wenn der Wechselstromadapter (11) angeschlossen wird, so ist, daß eine zum Gebrauch der Batterie ausreichende Lademenge erhalten wird.

2. Vorrichtung gemäß Anspruch 1, dadurch gekennzeichnet, daß die Batterie mit dem entladenen Batteriezustand geladen wird, bis die Lademenge die zum Gebrauch der Batterie ausreichende Lademenge übersteigt.

3. Vorrichtung gemäß Anspruch 1, dadurch gekennzeichnet, daß die Batterie mit dem entladenen Batteriezustand geladen wird, bis die Ladezeit eine der zum Gebrauch der Batterie ausreichenden Lademenge entsprechende vorherbestimmte Zeit übersteigt.

4. Batteriesteuerverfahren, das folgende Schritte umfaßt:
- Prüfen (S3), ob eine Batterie in einem entladenen Batteriezustand ist oder nicht,
- Anzeigen (S3 - S5; 18) eines entladenen Batteriezustands, um dem Benutzer ein Warnsignal bereitzustellen, daß der Ladezustand der Batterie nur etwas höher ist als derjenige, in dem die Batterie nicht genug Leistung liefern kann,
- Laden der Batterie, wenn ein Wechselstromadapter angeschlossen wird und die Batterie nicht in einem vollen Ladezustand ist,
- Erhalten (S11) einer Lademenge der Batterie,
- Detektieren einer in die Batterie eingespeisten Lademenge, und
- Bestimmen (S16), ob gemäß wenigstens eines der detektierten Lademenge und des erhaltenen Ladezeitraums eine gewünschte Lademenge für die Batterie erhalten wird oder nicht,
dadurch gekennzeichnet, daß
- die Anzeige der entladenen Batterie zurückgesetzt wird, wenn die Ladezeit oder die Lademenge nach dem Beginn des Wiederaufladens, wenn der Wechselstromadapter angeschlossen wird, so ist, daß eine zum Gebrauch der Batterie ausreichende Lademenge erhalten wird.

5. Verfahren gemäß Anspruch 4, dadurch gekennzeichnet, daß die Batterie mit dem entladenen Batteriezustand geladen wird, bis die Lademenge die zum Gebrauch der Batterie ausreichende Lademenge übersteigt.

6. Verfahren gemäß Anspruch 4, dadurch gekennzeichnet, daß die Batterie mit dem entladenen Batteriezustand geladen wird, bis die Ladezeit eine der zum Gebrauch der Batterie ausreichenden Lademenge entsprechende vorherbestimmte Zeit übersteigt.

## Revendications

1. Dispositif de commande de batterie comprenant :
au moins une batterie (13a, 13b) ;
un moyen de contrôle pour contrôler si la batterie est, ou non, dans un état de batterie faible ;
un moyen d'affichage (S3 à S5 ; 18) pour afficher un état de batterie faible pour donner un signal d'alarme à l'utilisateur indiquant que l'état de charge de batterie est seulement légèrement plus élevé que celui auquel la batterie ne peut plus délivrer suffisamment d'énergie ;
un moyen de charge pour charger la batterie lorsqu'un adaptateur de courant alternatif est connecté et que la batterie n'est pas dans un état de charge complète ;
un moyen d'obtention (16a) pour obtenir une durée de charge de la batterie ;
un moyen de détection (14a, 16, 14b) pour détecter une valeur de charge délivrée à la batterie ; et
un moyen de détermination (16) pour déterminer si la batterie a reçu, ou non, une valeur de charge souhaitée en fonction d'au moins l'une de la valeur de charge détectée et de la durée de charge obtenue ;
caractérisé en ce que :
l'indication de batterie faible est remise à zéro lorsque la durée de charge ou la valeur de charge, depuis le commencement de la recharge lorsque l'adaptateur de courant alternatif (11) est connecté, sont telles que la batterie a reçu une valeur de charge suffisante pour être utilisée.

2. Dispositif selon la revendication 1, caractérisé en ce que la batterie avec l'état de batterie faible est chargée jusqu'à ce que la valeur de charge excède une valeur de charge suffisante pour utiliser la batterie.

3. Dispositif selon la revendication 1, caractérisé en ce que la batterie avec l'état de batterie faible est chargée jusqu'à ce que le temps de charge dépasse un temps prédéterminé correspondant à une valeur de charge suffisante pour utiliser la batterie.

4. Procédé de commande de batterie comprenant les étapes :
de contrôle (S3) du fait que la batterie est, ou non, dans un état de batterie faible ;
d'affichage (S3 à S5 ; 18) d'un état de batterie faible pour donner un signal d'alarme à l'utilisateur indiquant que l'état de charge de batterie est seulement légèrement plus élevé que celui auquel la batterie ne peut plus délivrer suffisamment d'énergie ;
de charge de la batterie lorsqu'un adaptateur de courant alternatif est connecté et que la batterie n'est pas dans un état de charge complète ;
d'obtention (S11) pour obtenir une durée de charge de la batterie ;
de détection d'une valeur de charge délivrée à la batterie ; et
de détermination (S16) du fait que la batterie a, ou non, reçu une valeur de charge souhaitée en fonction d'au moins l'une de la valeur de charge détectée et de la durée de charge obtenue ;
caractérisé en ce que :
l'indication de batterie faible est remise à zéro lorsque la durée de charge ou la valeur de charge, depuis le commencement de la recharge lorsque l'adaptateur de courant alternatif est connecté, sont telles que la batterie a reçu une valeur de charge suffisante pour être utilisée.

5. Procédé selon la revendication 4, caractérisé en ce que la batterie avec l'état de batterie faible est chargée jusqu'à ce que la valeur de charge excède une valeur de charge suffisante pour utiliser la batterie.

6. Procédé selon la revendication 4, caractérisé en ce que la batterie avec l'état de batterie faible est chargée jusqu'à ce que le temps de charge dépasse un temps prédéterminé correspondant à une valeur de charge suffisante pour utiliser la batterie.
